Europäisches Patentamt

(19) European Patent Office

Office européen des brevets

(11) Publication number: **0 062 619**
**B1**

(12) EUROPEAN PATENT SPECIFICATION

(45) Date of publication of patent specification: **18.06.86**

(21) Application number: **82830074.9**

(22) Date of filing: **25.03.82**

(51) Int. Cl.⁴: **B 60 P 3/16,** B 65 G 11/14,
B 28 C 7/16

(54) Improvements in concrete mixer trucks.

(30) Priority: **06.04.81 IT 6748081**

(43) Date of publication of application:
**13.10.82 Bulletin 82/41**

(45) Publication of the grant of the patent:
**18.06.86 Bulletin 86/25**

(84) Designated Contracting States:
**AT BE CH DE FR GB IT LI LU NL SE**

(56) References cited:
**FR-A-2 451 334**
**US-A-2 968 382**
**US-A-3 157 262**
**US-A-3 481 440**
**US-A-4 190 144**

(73) Proprietor: **Bruni, Bruno**
**Piazza Bengasi 17**
**I-10024 Moncalieri Torino (IT)**

(72) Inventor: **Bruni, Bruno**
**Piazza Bengasi 17**
**I-10024 Moncalieri Torino (IT)**

(74) Representative: **Jacobacci, Filippo et al**
**c/o JACOBACCI-CASETTA & PERANI S.n.c. Via**
**Alfieri, 17**
**I-10121 Torino (IT)**

Courier Press, Leamington Spa, England.

## Description

The present invention relates to a telescopic discharge duct for a concrete mixer truck of the kind defined in the preamble of the appended claim 1.

US—A—2968382 discloses a discharge duct of the above type, which includes a plurality of chute sections and can be extended and retracted by means of a cylinder placed under the chute sections. Each section is guided and supported by an adjacent section so that in operation each section must sustain the weight of all the following sections and the concrete flowing on it and all the following sections. Thus in this known device the chute sections are heavily stressed and can be easily deformed so as to make the extrusion and retraction of the discharge duct more difficult or even no longer possible. Furthermore, the maximum length of this known discharge duct is limited.

Another known telescopic discharge duct is disclosed in US—A—3157262. In the discharge duct according to this document the chute sections are axially nested one in the other. The extension and retraction of the duct can be caused by means of a system of cables and pulleys, placed inside the chute sections. Also in this case each chute section is carried and supported by the preceding section, and must therefore sustain the weight of all subsequent sections and the concrete flowing thereon. Moreover, some concrete can slip into the interspace between adjacent sections, and once hardened, can block them.

US—A—3481440 discloses power means for rotating a discharge duct of a concrete mixer truck about a vertical axis and for raising or lowering the duct.

The main object of the invention is to provide a telescopic discharge duct of improved design, which allows the drawbacks of the prior devices to be overcome.

This object is achieved according to the invention through the telescopic discharge duct characterised in the appended claim 1.

Further characteristics and advantages of the concrete mixer truck according to a preferred embodiment of the present invention will become apparent from the detailed description which follows, made with reference to the appended drawings, provided purely by way of non-limiting example, in which:

Figure 1 is a side view of the rear part of a concrete mixer truck provided with a discharge duct according to the invention, in its extended configuration,

Figure 2 is a side view of the concrete mixer truck of Figure 1, with the discharge duct in its retracted condition,

Figure 3 is a perspective view of a discharge duct according to the invention,

Figure 4 is a partial perspective view of a duct element forming part of the discharge duct of Figure 3,

Figure 5 is a partial side view of the discharge duct of Figure 3,

Figure 6 is a partial perspective view of a variant embodiment of control means for the discharge duct of Figure 3, and

Figure 7 is a perspective view of the end portion of the discharge duct according to the invention, provided with a terminal curved element.

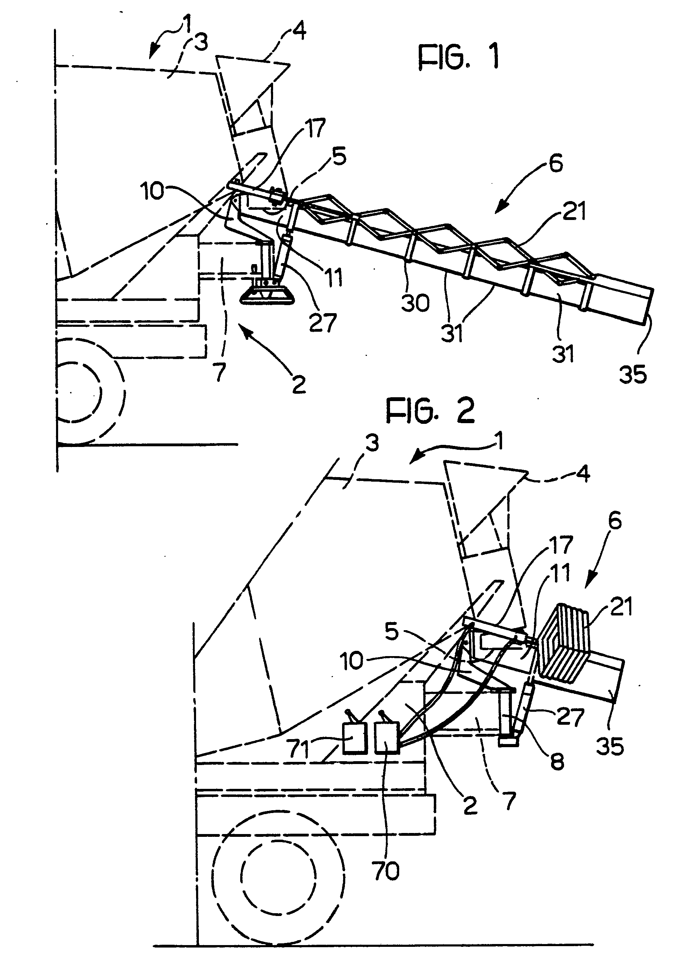

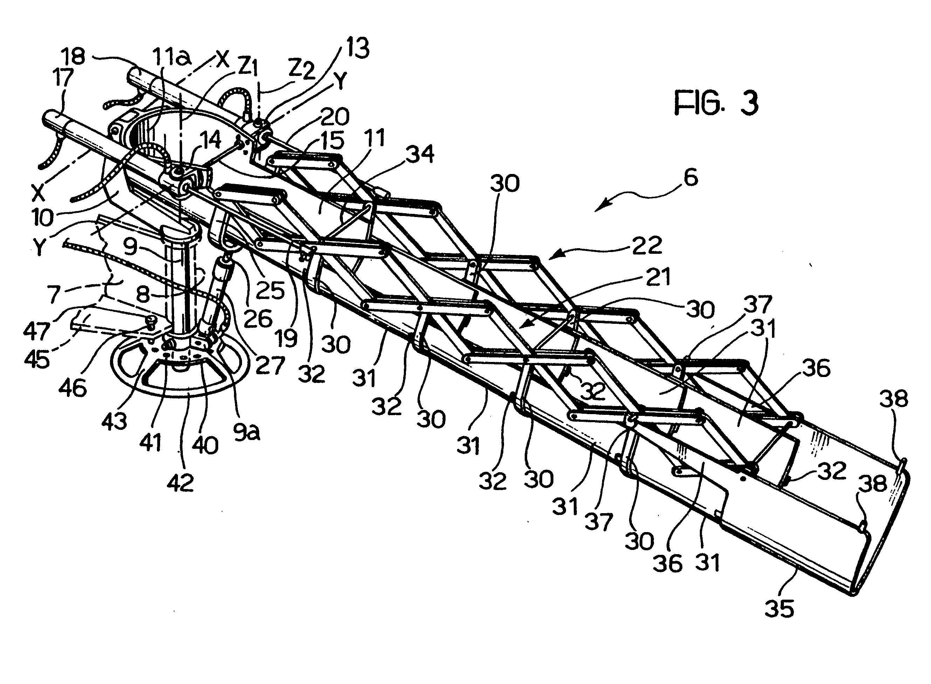

With reference to Figures 1 and 2, a concrete mixer truck is indicated 1, the chassis of which is provided with a framework 2 which supports a concrete mixer 3 in the form of a drum rotatable about an inclined axis lying in the medial longitudinal plane of the vehicle. The rear end of the concrete mixer 3 is provided with a loading hopper 4 and a lower discharge opening 5. A discharge duct, generally indicated 6, is supported by the framework 2 beneath the discharge opening 5 of the concrete mixer. As will be better described below, the discharge duct 6 can be extended and shortened continuously in the axial direction. Figure 1 shows the discharge duct 6 in its configuration of maximum length. Figure 2 illustrates the discharge duct 6 in its configuration of minimum length.

As illustrated in Figures 1 to 3, a vertical plate 7 is fixed to the rear end of framework 2 of the truck. A sleeve 8 is fixed to the vertical end edge of the plate 7. Within the sleeve 8 is rotatably mounted a shaft 9, to the upper end of which is fixed an arm 10. A first duct element 11 is connected to the upper end of the arm 10 so as to be rotatable about a horizontal axis X—X. Adjacent the arm 10, the facing side walls of the duct element 11 are connected by a lateral wall 11$a$. The end portion of the duct element 11 facing the arm 10 is always located below the discharge opening 5 of the concrete mixer 3.

To the median portion of the duct element 11 close to the upper edges of the side walls of said duct element first and second fork elements 13, 14 are connected, so as to be rotatable about a horizontal axis Y—Y parallel to the axis X—X. The fork elements 13, 14 are connected together by a shaft 15 which extends in the direction of the axis Y—Y through facing apertures formed in the side walls of the duct element 11.

By 17 and 18 are shown first and second double-acting hydraulic cylinders supported by the fork elements 14 and 13 respectively so as to be rotatable about respective axes $Z_1$—$Z_1$, $Z_2$—$Z_2$, which are parallel to each other and perpendicular to the axis Y—Y. The hydraulic cylinders 17, 18 have respectively rods 19, 20.

By 21 and 22 are shown respectively first and second pantograph support structures each constituted by a succession of articulated parallelograms of equal sizes disposed in respective vertical planes. The pantograph structures 21, 22 are similar and parallel to each other.

The articulated parallelograms of the structures 21, 22 at the ends adjacent the truck 3 are connected, so as to be rotatable about a horizontal axis, to the ends of the two arms of a fork element 25 which surrounds the lower part of the element 11. The fork element 25 is connected to the rod 26 of a single acting hydraulic cylinder 27. The end of the body of the hydraulic cylinder 27 opposite the fork 25 is connected to a radial lug 9a at the lower end of the shaft 9, so as to be rotatable about a horizontal axis parallel to the said axis X—X. The lug 9a of the shaft 9 is preferably shaped in the form of a fork.

To each articulated joint of the pantograph structure 21, common to two adjacent articulated parallelograms of this structure, there is rotatably connected a first end of a respective C-shaped bracket 30 the concavity of which faces upwardly and the other end of which is rotatably connected to the homologous articulated joint of the other support structure 22. One end of a respective duct element 31 is attached to each bracket 30 for example by welding. The other end of each duct element 31 rests on the upper surface of the adjacent duct element 31.

The lower surface of each duct element 31, close to the end opposite the respective bracket 30, has a plurality of longitudinal projections 32 (Figures 3 and 4) for facilitating the relative sliding of the respective duct element and the adjacent duct element.

The free ends of the rods 19, 20 of the cylinders 17, 18 are interconnected by a horizontal cross bar 34 which, at the same time, acts as the articulation pin between the first and the second articulated parallelograms of the pantograph structures 21, 22 and the corresponding bracket 30.

By 35 is shown an end duct element which is rotatably connected to the end articulated joints of the pantograph structures 21, 22. The duct element 35 has two parallel arms 36 extending towards the concrete mixer 3, the upper edge of each arm 36 bearing against a respective stop pin 37 carried by the pantograph structures 21 and 22 respectively, close to the articulated joint which is common to the two end articulated parallelograms.

By 38 are shown first and second pins carried by the upper edge of the duct element 35 in that end portion opposite the concrete mixer.

To the lower end of shaft 9 there is fixed a disc 40 lying in a substantially horizontal plane and provided with a ring of substantially equispaced holes 41. A handwheel 42, lying in a substantially horizontal plane, is connected to the disc 40 by spokes 43.

A bracket 45, disposed in a substantially horizontal plane, is rigidly connected to the lower part of the plate 7. This bracket has a hole 46 for receiving a stop pin 47. The lower end of this pin is adapted to engage a hole 41 in the disc 40 connected to the lower part of the shaft 9 to lock this disc, the handwheel 42 and the shaft 9 in a predetermined angular position.

In use, during the stage of transporting the concrete mixture, the discharge duct 6 is maintained in the retracted condition, in a position rotated through 90° (about the vertical) relative to that illustrated in Figure 2. Under these conditions the discharge duct 6 has a minimum extent.

When the place of use is reached, the concrete mixer truck is stopped close to the formwork or other structure intended to receive the concrete mixture contained in the concrete mixer 3. The driver leaves his driving position and orientates the discharge duct 6 by operating the handwheel 42.

Close to the rear part of the concrete mixer truck there are located first and second manually controlled hydraulic pumps 70, 71 (Figures 1 and 2) arranged to actuate the cylinders 17, 18 and the cylinder 27 respectively. By actuating the pump 70, the operator can cause the rods 19, 20 to extend out from the cylinders 17, 18. Consequently the pantograph structures 21, 22 extend, causing the duct elements 31 to slide relative to each other. The overall length of the discharge duct 6 increases continuously. The operator stops the actuation of the cylinders 17, 18 as soon as the duct 6 has reached the desired length.

When necessary the operator can rotate the discharge duct 6 upwardly or downwardly about the axis X—X by actuating the hydraulic pump 71 connected to cylinder 27. The actuation of this cylinder effects translational movement of the rod 26 of this cylinder and consequently rotation of the duct 6 about the said axis X—X, by means of the fork element 25.

If necessary the operator can also change the angular position of the duct 6 relative to the longitudinal median axis of the concrete mixer truck. For this purpose it suffices for the operator to unlock the handwheel 42, by extracting the pin 47 from the hole 46 in the bracket 45. Once this operation has been effected, the operator can change the position of the duct 6 by rotating the handwheel 42. When the desired angular position is reached, the handwheel 42 can again be locked in position by the introduction of the pin 47 into the hole 46 of the bracket 45 and into the hole 41 of the disc 40 corresponding to the desired position.

From what has been explained above, clearly the discharge duct according to the invention eliminates the problem of carrying out the manoeuvres for positioning and bringing the concrete mixer truck close to the formwork (or other structure) intended to receive the concrete in the concrete mixer. Moreover, only a single operator is needed to position the end of the discharge duct 6 correctly relative to the formwork.

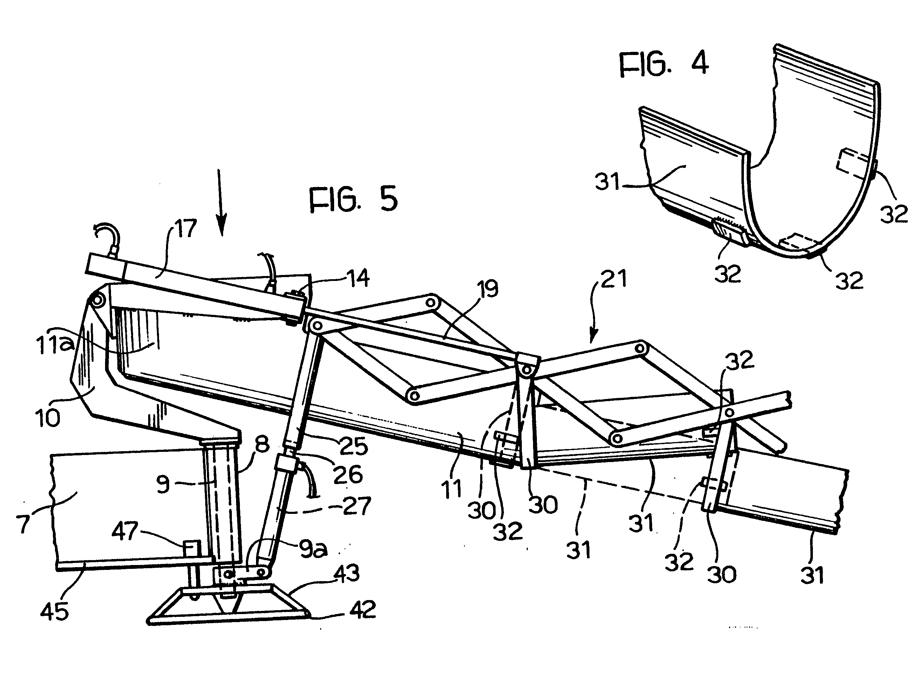

Once the concrete mixture has been transferred from the concrete mixer to a receiving structure, the discharge duct 6 illustrated in Figure 3 may easily be cleaned. This cleaning operation may be carried out simply by means of a jet of water and is facilitated by the possibility of rotating each duct element 31 upwardly independently of the adjacent duct element, as illustrated in Figure 5.

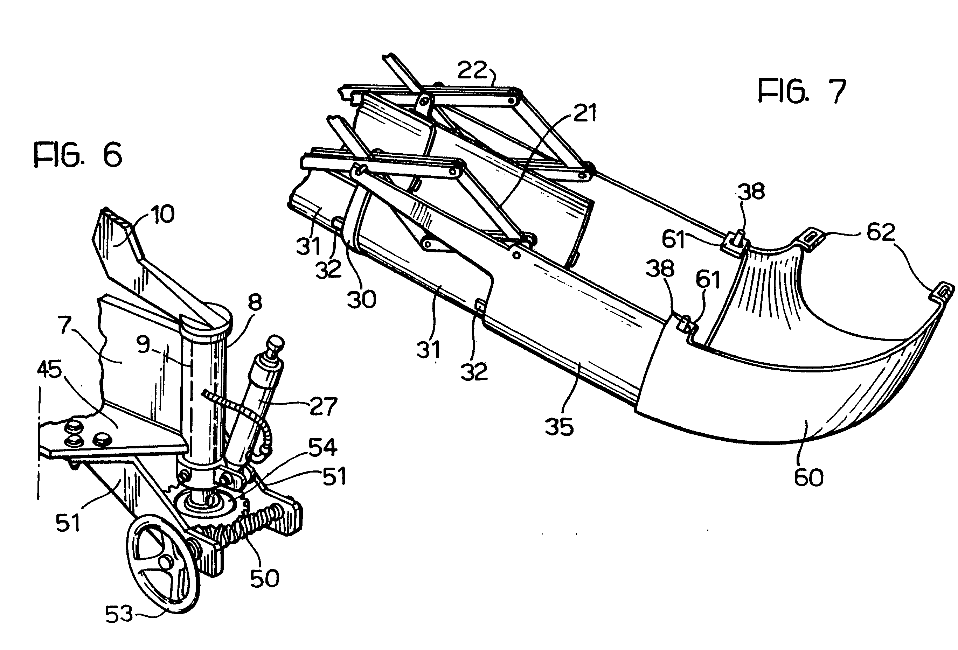

According to a partially varied embodiment, illustrated in Figure 6, the rotation of the discharge duct 6 about the vertical axis may be controlled by means of a worm 50 rotatably supported by two arms 51 fixed to two brackets 45 rigid with the vertical plate 7 described above. The worm 50 is provided at one end with a handwheel 53. To the lower end of the shaft 9 there is connected a helically toothed worm wheel 54 the peripheral teeth of which engage the worm 50. The coupling between the worm 50 and the worm wheel 54 is preferably of the irreversible type. Rotation of the wheel 53, through the worm 50 and the worm wheel 54, effects rotation of the shaft 9 and hence of the discharge duct 6. If, as has been indicated above, the coupling between the worm 50 and the worm wheel 54 is of irreversible type, no further means are necessary for locking the discharge duct 6 in the desired angular position.

As illustrated in Figure 7, the discharge duct 6 described above may be fitted with a further duct element 60 provided, at one end, with a pair of lugs 61 each of which is formed with a hole for engagement by respective pin 38 carried by the end duct element 35. As illustrated in the said Figure 7, the duct element 60 is curved and may be used for the lateral discharge of the concrete mixture from the concrete mixer 3 towards a receiving structure. More particularly, the duct element 60 may be used for directing a jet of concrete mixture into a lateral receiving structure, with the concrete mixer truck moving along this receiving structure.

The curved duct element 60 preferably has a second pair of lugs 62 also provided with respective holes, and at the opposite end from the lugs 61. Thanks to this device, it is possible to use the same curved duct element for discharging the concrete mixture on one side of the vehicle or on the other side. The duct elements 31, 35 and 60 may conveniently be formed in plastics material (polymer) to allow improved sliding of the mixture, a lighter structure for the discharge duct and easier cleaning of the latter.

## Claims

1. A telescopic discharge duct (6) for a concrete mixer truck provided with power means (17, 18) which, when activated, cause the extension of the discharge duct to allow the transfer of the concrete to the place of use; the discharge duct comprising a plurality of axially slidable duct elements (31), characterised in that it further comprises first and second support structures (21, 22) disposed one on each side of the discharge duct (6), each structure (21, 22) consisting of a lazy-tongs mechanism, each duct element being attached to a respective articulated joint of each support structure; and in that the said power means are connected to the said support structures, whereby activation of the power means causes extension of the support structures and of the discharge duct.

2. A telescopic discharge duct according to Claim 1, characterised in that the said support structures are disposed in respective substantially vertical planes and each duct element has one end rotatably attached to said support structures and the other end resting on the adjacent duct element.

3. A telescopic discharge duct according to Claim 2, characterised in that it includes a plurality of C-shaped brackets (30) connected, with the concavity facing upwardly, between an articulated joint common to two adjacent parallelograms of the said first support structure (21) and the homologous articulated joint of the said second support structure (22); there being connected to each said bracket (30) a respective duct element (31) of the said plurality of duct elements (31).

4. A telescopic discharge duct according to any of the preceding Claims, characterised in that the said duct elements (31) are of polymeric material.

5. A telescopic discharge duct according to any of the preceding Claims, characterised in that the said power means comprise a pump (70) and a first and a second fluid cylinder (17, 18) connected to the said pump (70), the cylinder bodies being supported by the vehicle chassis (2) and their rods (19, 20) being connected to the said first and second support structure (21, 22), respectively.

6. A telescopic discharge duct according to Claim 5, characterised in that it is connected to one end of an arm (10) to be supported by the vehicle chassis (2) for rotation about a substantially vertical axis, and in that it further includes control means comprising a handwheel (42) connected to the said arm (10) and arranged, when rotated, to cause an angular displacement of the said arm about the said vertical axis.

7. A telescopic discharge duct according to Claim 6, characterised in that it further includes stop means (47, 46, 40, 41) arranged to lock the said handwheel (42) in one or more predetermined angular positions.

8. A telescopic discharge duct according to Claim 5, characterised in that it is connected to one end of an arm (10) to be supported by the vehicle chassis (2) for rotation about a substantially vertical axis, and in that it further includes control means comprising a helically toothed wheel (54) connected to the said arm, and a worm (50) coupled together in an irreversible manner.

9. A concrete mixer truck, characterised in that it comprises a telescopic discharge duct according to any of the preceding Claims.

## Patentansprüche

1. Teleskopartig bewegbare Auslaßrinne (6) für ein Betonmischerfahrzeug, das mit Antriebseinrichtungen (17, 18) ausgestattet ist, die bei Betätigung ein Ausfahren der Auslaßrinne veranlassen zwecks Ermöglichung der Beförderung des Betons zu der Verwendungsstelle; wobei die Auslaßrinne eine Mehrzahl von in Axialrichtung gleitend verschiebbaren Rinnenelementen (31) aufweist, dadurch gekennzeichnet, daß sie außerdem eine erste und eine zweite Tragekonstruktion (21, 22) aufweist, von denen auf jeder Seite der Auslaßrinne (6) eine angeordnet ist, wobei jede

7 **0 062 619** 8

Konstruktion (21, 22) aus einem Scherenarmmechanismus besteht und jedes Rinnenelement jeweils an einer Gelenkverbindung jeder Tragekonstruktion angebracht ist; und daß die genannten Antriebseinrichtungen mit den genannten Tragekonstruktionen verbunden sind, wodurch eine Betätigung der Antriebseinrichtungen ein Ausfahren der Tragekonstruktionen sowie der Auslaßrinne veranlaßt.

2. Teleskopartig bewegbare Auslaßrinne nach Anspruch 1, dadurch gekennzeichnet, daß die genannten Tragekonstruktionen jeweils in im wesentlichen senkrechten Ebenen angeordnet sind, und daß jedes Rinnenelement mit seinem einen Ende an den genannten Tragekonstruktionen schwenkbar angebracht ist und mit seinem anderen Ende auf dem angrenzenden Rinnenelement aufliegt.

3. Teleskopartig bewegbare Auslaßrinne nach Anspruch 2, dadurch gekennzeichnet, daß sie eine Mehrzahl C-förmiger Träger (30) aufweist, die mit der konkaven Seite nach oben weisend zwischen einer Gelenkverbindung, die zwei be-nachbarten Parallelogrammen der genannten er-sten Tragekonstruktion (21) gemeinsam ist, und der homolog ausgebildeten Gelenkverbindung der genannten zweiten Tragekonstruktion (22) verbindend angeordnet sind; wobei mit jedem der genannten Träger (30) jeweils ein Rinnenelement (31) der genannten Mehrzahl von Rinnenelementen (31) verbunden ist.

4. Teleskopartig bewegbare Auslaßrinne nach einem der vorausgehenden Ansprüche, dadurch gekenzeichnet, daß die genannten Rinnenelemente (31) aus einem polymeren Material bestehen.

5. Teleskopartig bewegbare Auslaßrinne nach einem der vorausgehenden Ansprüche, dadurch gekennzeichnet, daß die genannten Antriebseinrichtungen eine Pumpe (70) sowie einen ersten und einen zweiten Fluidzylinder (17, 18) umfassen, die mit der genannten Pumpe (70) verbunden sind, wobei die Zylinderkörper von dem Fahrzeugchassis (2) getragen sind und ihre Stangen (19, 20) mit der genannten ersten bzw. der genannten zweiten Tragekonstruktion (21, 22) verbunden sind.

6. Teleskopartig bewegbare Auslaßrinne nach Anspruch 5, dadurch gekennzeichnet, daß sie mit einem Ende eines von dem Fahrzeugchassis (2) zu tragenden Arms (10) verbunden ist zwecks Rotation um eine im wesentlichen senkrechte Achse, und daß sie außerdem Steuereinrichtungen aufweist, die ein Handrad umfassen, das mit dem Arm (10) verbunden ist und derart ausgelegt ist, daß es bei seiner Rotation eine winkelmäßige Verlagerung des genannten Arms um die genannte senkrechte Achse veranlaßt.

7. Teleskopartig bewegbare Auslaßrinne nach Anspruch 6, dadurch gekennzeichnet, daß sie außerdem Stopp-Einrichtungen (47, 46, 40, 41) aufweist, die zum Verriegeln des genannten Handrads (42) in einer oder mehreren vorbestimmten Winkelpositionen ausgelegt sind.

8. Teleskopartig bewegbare Auslaßrinne nach Anspruch 5, dadurch gekennzeichnet, daß sie mit einem Ende eines von dem Fahrzeugchassis (2) zu tragenden Arms (10) verbunden ist zwecks Rotation um eine im wesentlichen senkrechte Achse, und daß sie außerdem Steuereinrichtungen aufweist, die ein mit dem genannten Arm verbundenes schrägverzahntes Rad (54) sowie eine Schnecke (50) umfassen, die in nicht reversibler Weise miteinander gekoppelt sind.

9. Betonmischerfahrzeug, dadurch gekennzeichnet, daß es eine teleskopartige bewegbare Auslaßrinne nach einem der vorausgehenden Ansprüche aufweist.

**Revendications**

1. Conduite de décharge télescopique (6) pour camion mélangeur de béton pourvu de moyens de puissance (17, 18) qui, quand ils fonctionnent, provoquent l'extension de la conduite de décharge pour permettre le transfert du béton jusqu'au lieu d'utilisation; la conduite de décharge comprenant plusieurs éléments de conduite cou-lissables axialement (31), caractérisée en ce qu'elle comprend en outre une première et une seconde structures de support (21, 22) disposées chacune de chaque côté de la conduite de décharge (6), chaque structure (21, 22) consistant en un mécanisme à pince extensible, chaque élément de conduite étant attaché à un joint articulé respectif de chaque structure de support; et en ce que lesdits moyens de puissance sont connectés auxdites structures de support, ce qui fait que la mise en oeuvre des appareils de force provoque l'extension des structures de support et de la conduite de décharge.

2. Conduite de décharge télescopique selon la revendication 1, caractérisée en ce que lesdites structures de support sont disposées dans des plans respectifs pratiquement verticaux et en ce que chaque élément de conduite a une extrémité liée à rotation auxdites structures de support et l'autre extrémité reposant sur l'élément de conduite adjacent.

3. Conduite de décharge télescopique selon la revendication 2, caractérisée en ce qu'elle comporte plusieurs consoles en forme de C (30) connectés, avec la concavité tournée vers le haut, entre un joint articulé commun à deux parallèlo-grammes adjacents de ladite première structure de support (21) et le joint articulé homologue de ladite seconde structure de support (22); un élément de conduite respectif (31) desdits plusieurs éléments de conduite (31) étant connecté à chacune desdites consoles (30).

4. Conduite de décharge télescopique selon l'une quelconque des revendications précédentes, caractérisée en ce que lesdits éléments de conduite (31) sont en matériau polymère.

5. Conduite de décharge télescopique selon l'une quelconque des revendications précédentes, caractérisée en ce que lesdits moyens de puissance comprennent une pompe (70) et un premier et un second cylindres à fluide (17, 18) connectés à ladite pompe (70), les corps de

5

cylindre étant supportés par le châssis (2) du véhicule et leurs tiges (19, 20) étant connectées auxdites première et seconde structures de support (21, 22) respectivement.

6. Conduite de décharge télescopique selon la revendication 5, caractérisée en ce qu'elle est connectée à une extrémité d'un bras (10) pour être supportée par le châssis (2) du véhicule pour pouvoir tourner en rotation autour d'un axe pratiquement vertical, et en ce qu'il comporte en outre des moyens de commande comprenant un volant à main (42) connecté audit bras (10) et disposé, quand il est tourné, de façon à causer un déplacement angulaire dudit bras autour dudit axe vertical.

7. Conduite de décharge télescopique selon la revendication 6, caractérisée en ce qu'elle comprend en outre des dispositifs d'arrêt (47, 46, 40, 41) disposés pour verrouiller ledit volant à main (42) dans une ou plusieurs positions angulaires prédéterminées.

8. Conduite de décharge télescopique selon la revendication 5, caractérisée en ce qu'elle est connectée à une extrémité d'un bras (10) pour être supportée par le châssis (2) du véhicule de façon à pouvoir tourner en rotation autour d'un axe pratiquement vertical, et en ce qu'elle comporte en outre des dispositifs de commande comprenant une roue dentée hélicoïdale (54) liée audit bras, et une vis sans fin (50) couplées ensemble d'une manière irréversible.

9. Camion mélangeur de béton, caractérisé en ce qu'il comprend une conduite de décharge télescopique selon l'une quelconque des revendications précédentes.

FIG. 1

FIG. 2

FIG. 3

FIG. 4

FIG. 5

0 062 619

FIG. 6

FIG. 7

0 062 619